Europäisches Patentamt

European Patent Office

Office européen des brevets

(19)

(11) **EP 1 731 727 A1**

(12) **EUROPEAN PATENT APPLICATION**
published in accordance with Art. 158(3) EPC

(43) Date of publication:
**13.12.2006 Bulletin 2006/50**

(51) Int Cl.:
*F01N 3/20* (2006.01)  *F01N 3/02* (2006.01)

(21) Application number: **04723024.8**

(22) Date of filing: **24.03.2004**

(86) International application number:
**PCT/JP2004/004053**

(87) International publication number:
**WO 2005/090760 (29.09.2005 Gazette 2005/39)**

(84) Designated Contracting States:
**DE FR**

(71) Applicant: **HITACHI, LTD.**
**Chiyoda-ku**
**Tokyo 100-8280 (JP)**

(72) Inventors:
• **KANEEDA, Masato,**
**c/oHitachi, Ltd.**
**Int. Prop. Group**
**1-chome**
**Chiyoda-ku, Tokyo 100-8220 (JP)**
• **IIZUKA, Hidehiro,**
**c/o Hitachi, Ltd.**
**Int.Prop.Group**
**1-chome**
**Chiyoda-ku, Tokyo 100-8220 (JP)**

• **HIGASHIYAMA, Kazutoshi,**
**c/o Hitachi, Ltd.**
**I.P.G.**
**1-chome**
**Chiyoda-ku**
**Tokyo100-8220 (JP)**
• **KITAHARA, Yuichi,**
**c/o Hitachi, Ltd.**
**Int.Prop.Group**
**1-chome,**
**Chiyoda-ku, Tokyo 100-8220 (JP)**
• **KURODA, Osamu,**
**c/o Hitachi, Ltd.**
**Int.Prop.Group**
**1-chome**
**Chiyoda-ku, Tokyo 100-8220 (JP)**

(74) Representative: **Beetz & Partner**
**Steinsdorfstrasse 10**
**80538 München (DE)**

(54) **EXHAUST GAS PURIFICATION APPARATUS, EXHAUST GAS PURIFICATION METHOD, AND SULFUR TRAPPING AGENT FOR INTERNAL COMBUSTION ENGINE**

(57) An object of the present invention is to provide a new exhaust gas purification apparatus for an internal combustion engine operated under a condition of an air fuel ratio leaner than a theoretical air fuel ratio, a method for purification of exhaust gas and an exhaust gas purification catalyst, which is suitable for suppressing degradation of the NOx purification catalyst by sulfur components.

An exhaust gas purification apparatus for an internal combustion engine, which comprises an exhaust gas passage for an internal combustion engine into which exhaust gas of lean air fuel ratio and rich or stoichiometric air fuel ratio flows, a NOx trapping catalyst that functions to trap NOx in the exhaust gas when the air fuel ratio is lean, a sulfur component trapping agent for trapping sulfur components in the exhaust gas, which is disposed before the NOx trapping catalyst, and a catalyst for oxidizing the sulfur components, which is disposed before the sulfur component trapping agent, wherein the sulfur component trapping agent has a trapping rate of 85 % or more of an amount of inflow sulfur in a trapping test at a flow rate of 150 ppm $SO_3$- 5% $O_2$ - balance being $N_2$ gas per 1.5 moles of the sulfur trapping agent at 300 °C and a space velocity of 30,000/h for 1 hour;
and the sulfur component trapping agent has a release rate of sulfur amount of 5 % or less of sulfur trapped in the sulfur component trapping agent in a release test under a flow of a 3000 ppm $H_2$ - 600 ppm C3H6 - 3000 ppm $O_2$ - 3.5 % CO - balance being $N_2$ gas at a temperature elevation rate of 10 °C/min from 250 to 750 °C at an sulfur component trapping agent entrance, after the trapping test.

# FIG. 1

S OXIDIZING CAT.

S TRAPPING AGENT

NOx TRAPPING CAT.

ENGINE

**Description**

Technical Field:

The present invention relates to an exhaust gas purification apparatus and exhaust gas purification method for an internal combustion engine operated under a lean burn condition, wherein fuel is leaner than a theoretical air/fuel ratio.

Background art:

In recent years, there have been attention to lean burn engines for lean fuel combustion in terms of an air fuel ratio. The air fuel ratio represents a ratio of air to fuel in gas.

Three way catalysts that have been used for exhaust gas purification of engines for theoretical air fuel ratio (stoichiometry) combustion have difficulty in purifying NOx. Thus, exhaust gas purifying catalysts for lean burn engines are investigated. One of them is disclosed in Japanese patent laid-open 11-319564(Patent publication 1) is disclosed. The publication discloses one of NOx absorbing metal oxides selected from alkali metals, alkaline earth metals and rare earth metals and a noble metal supported on a porous support. According to the publication, NOx is effectively purified in a lean state of the air fuel ratio by using the catalysts. However, it has been known that since the exhaust gas from the lean burn engines contains SOx derived from sulfur contained in gasoline, activity of the catalysts is deteriorated by SOx, which reacts with components in the NOx trapping catalysts.

$$M\text{-}O + SO_2 + O_2 \rightarrow M\text{-}SO_4 \qquad (1)$$

(M: alkali metals or alkaline earth metals)

When the catalytic activity by sulfur component happens, it has been contemplated that the catalysts are exposed to gas of high temperature and rich or stoichiometric s air fuel ratio so as to carry out a reaction shown by the formula (2), thereby to regenerate the catalyst by desorbing the sulfur component (S purge).

$$M\text{-}SO_4 \rightarrow M\text{-}O + SO_2 + O_2 \qquad (2)$$

(M: alkali metals or alkaline earth metals)

In addition to the S purge, a method for controlling absorption amount of SOx is disclosed in Japanese patent laid-open 8-192051 (Patent document 2) wherein composite oxides of Ti and Zr are used as a support whereby the activity of the NOx trapping catalysts is maintained even if sulfur components are present in the exhaust gas.

Further, Japanese patent laid-open 11-169708 (Patent document 3) discloses a SOx trapping agent is disposed before the NOx trapping catalyst, thereby to trap SOx at the time of lean air fuel ratio and release SOx at the time of rich air fuel ratio, whereby an amount of inflow of sulfur components is reduced to suppress the sulfur poisoning to the NOx trapping catalysts or NOx purification catalyst.

Description of invention:

The S purge makes fuel cost worse because it employs rich air fuel ratio. When a large amount of sulfur components adheres to the NOx trapping catalyst or NOx purification catalyst, an amount of a reducing agent for removing sulfur components as the amount of adhered sulfur components increases. As a result, a degree of rich air fuel ratio becomes large (the air fuel ratio becomes small), which makes the fuel cost worse. Further, once a large amount of sulfur components adhere to the NOx trapping catalyst, sulfur components that strongly react with the NOx trapping agent are hard to be removed thereby to lower the purification performance.

On the other hand, at the time of regeneration of NOx catalysts, sulfur components react with hydrogen, etc contained in the exhaust gas and exhausted as hydrogen sulfide ($H_2S$) as shown in the formula 3, which makes the exhaust gas smell.

$$M\text{-}SO_4 + H_2 \rightarrow M\text{-}O + H_2S + O_2 \qquad (3)$$

According to the technologies disclosed in Japanese patent laid-open 8-192051 (Patent document 2), adhesion of sulfur components to the NOx trapping catalyst at the time of lean air fuel ratio is suppressed and NOx trapping performance becomes lower.

According to the technologies disclosed in Japanese patent laid-open 11-169708 (Patent document 3), though an amount of inflow of sulfur components at the time of lean air fuel ratio, the sulfur components are released from the SOx trapping agent disposed in front of the NOx trapping catalyst at the time of rich air fuel ratio, and the NOx catalyst is sulfur poisoned by the released sulfur. Accordingly, S purge is necessary, which leads to the above problem, however.

Further, regeneration of sulfur trapping agent is necessary at the time of rich air fuel ratio where sulfur components are released, sulfur components are discharged though a NOx trapping rate of NOx trapping catalyst increases.

In addition to the above, since development for increasing a NOx purification rate under lean burn conditions has been made, an exhaust gas purification systems that does not discharge sulfur components has never been investigated. Since regeneration of NOx trapping catalyst and sulfur trapping agent release sulfur components, these sulfur components should be controlled.

An object of the present invention is to provide a sulfur component trapping agent that removes the above-mentioned disadvantages and can trap sulfur components for a long time, an exhaust gas purification apparatus and an exhaust gas purification method.

The present invention relates to an exhaust gas purification apparatus for an internal combustion engine capable of lean burn operation at an air fuel ratio leaner than the theoretical air fuel ratio (18 or more), which comprises an exhaust gas passage of an internal combustion engine into which exhaust gas of an air fuel ratio of 14.7 or less flows, an NOx purification catalyst for trapping NOx in the exhaust gas at the time of lean air fuel ratio, and a sulfur component trapping agent, disposed in a previous stage of or before the NOx tapping catalyst, for capable of trapping sulfur components in the exhaust gas, wherein the sulfur trapping agent does not desorb (or does not substantially release) at the time of rich or stoichiometric air fuel ratio. The sulfur components include sulfur and sulfur compounds, which are derived from gasoline, light oil, lubricants, etc, and are present in the exhaust gas.

The words "does not desorb" are used to mean that a damaging amount of sulfur components are not released. For example, the sulfur component trapping agent exhibit a trapping rate of 85 % or more with respect to an inflow amount of sulfur components when gas composed of 150 ppm $SO_2$ - 5%$O_2$ - balance being $N_2$ is flown through the sulfur component trapping agent at an SV of 30,000/h and at 300°C per 1.5 mol of the sulfur component trapping agent, and after the above test, the sulfur trapping agent exhibits an amount of 5 % or less of sulfur components released from the sulfur component trapping agent per an amount of trapped sulfur components under conditions that a gas composition is 2000 ppm$H_2$ - 500ppm$C_3H_6$ - 3000ppm$O_2$ - 3.5%CO - balance being $N_2$, which is flown through the sulfur components trapping and temperatures are elevated from 300 to 750 °C at a rate of 10 °C/min.

Another feature of the present invention resides in providing an exhaust gas purification apparatus that installs a sulfur component trapping agent capable of sufficiently trapping sulfur components under rich or stoichiometric conditions.

A still another feature of the present invention resides in that a sulfur component trapping agent is disposed in the previous stage of the NOx trapping catalyst so as to suppress reduction of catalytic activity by the sulfur adhesion and a catalyst for oxidizing sulfur in the exhaust gas is disposed in the previous stage of the sulfur component trapping agent. The sulfur trapping agent includes a support that holds sulfur components in the exhaust gas.

As is disclosed in Japanese laid-open 11-169708, bonding power of $SO_2$ to the sulfur component trapping agent is weaker than that of $SO_3$, and the sulfur components are hard to be trapped. This is because the number of oxygen atoms in $SO_3$ is large and because there is imbalance of electrons. Thus, acidity of the $SO_3$ is high. Accordingly, the sulfur components in the exhaust gas are more easily trapped in the form of $SO_3$ than $SO_2$, as shown in the formula 4.

$$SO_2 + O_2 \rightarrow SO_3 \qquad (4)$$

Further, when $SO_2$ gas enters the sulfur trapping agent, there is a possibility of reaction represented by the formula (5) in addition to the formula (2) thereby to produce sulfites as well as sulfates.

$$M\text{-}O + SO_2 \rightarrow M\text{-}SO_3 \qquad (5)$$

(M: metal atom for the sulfur trapping agent)

In general, sulfites are less stable than sulfates, and thus decomposition temperature of the sulfites is low. Accordingly, if sulfites are produced dominantly, a temperature of the exhaust gas elevates, and the temperature of the sulfur trapping agent elevates, decomposition reaction of the sulfites takes place thereby to release sulfur components from the sulfur trapping agent and to cause a problem that a NOx trapping catalyst disposed at a post stage may be poisoned by sulfur components.

By disposing a catalyst for oxidizing sulfur components in the exhaust gas in front of the sulfur component trapping agent, sulfur components are trapped as $SO_3$. As examples of sulfur component oxidizing catalysts, noble metals such as Rh, Pt, Pd, etc, and any other catalysts that can oxidize sulfur can be employed.

Although a sulfur component trapping agent supported together with sulfur component oxidizing component are supported on the same support may trap the sulfur components, such sulfur trapping agents are not proper if the sulfur oxidizing catalysts oxidize sulfur components and accelerate decomposition, which leads to release of sulfur from the sulfur component trapping agent.

The sulfur component trapping agent according to the present invention is featured by that the sulfur trapping agent is an oxide or carbonate of the metals and is capable of forming sulfates or sulfites that hardly release or discharge trapped sulfur components even when a temperature of the sulfur trapping agent elevates. The sulfur trapping agent is featured by sulfates of alkali metals such as Li, Na, K, Rb, Cs, etc, alkaline earth metals such as Mg, Ca, Sr, Ba, etc, or Ce, Al, Y, La, Ni, etc, which form sulfates having high melting points or high decomposition temperatures, and is also featured by not substantially containing such components as Ph, Pt, Pd, etc.

If the components such as noble metals that effect reaction of decomposition of sulfites are contained in the SOx trapping agent, the sulfur components trapped as the sulfites in the SOx trapping agent may be released in accordance with the formula (2) in a rich air fuel ratio. Accordingly, it is preferable that any components that contribute to decomposition reaction of sulfites are not contained in the sulfur component trapping agent. A preferable total amount of the noble metals should be 0.4 % by weight or less, and more preferably, 0.3 % by weight or less.

The present invention also relates to a filter, disposed in an exhaust gas passage of an internal combustion engine, for purification of exhaust gas from an internal combustion engine, a part of which carries a sulfur oxidizing catalyst and the other part of which carries a sulfur component trapping agent. The present invention relates to an exhaust gas purification apparatus using the exhaust gas purification filter. The exhaust gas purification apparatus is featured by disposing the filter in such a manner that the exhaust gas is introduced into the sulfur component oxidizing catalyst side and discharged from the sulfur component trapping agent side.

The sulfur component oxidizing catalyst may be supported on the surface of the upstream side of the filter, which is a plate or shaped flat filter, as same as in diesel particulate filters.

The sulfur component trapping agent or the exhaust gas purification apparatus according to the present invention can suppress degradation of the NOx purification catalyst for the internal combustion engine, which is operated under the lean burn condition of which the air fuel ratio is leaner than that of theoretical air fuel ratio.

Further, the present invention can provide an internal combustion engine for automobiles and an exhaust gas purification apparatus that has good fuel consumption, suppressed degradation of a NOx purification catalyst caused by sulfur component and a small amount of sulfur component emission.

Brief description of drawings:

Fig. 1 is an arrangement of a NOx trapping catalyst, sulfur component trapping agent and sulfur component oxidizing catalyst.

Fig. 2 is a graph showing a SOx trapping rate with respect to disposition and non-disposition of the sulfur oxidizing catalyst.

Fig. 3 is a graph showing release of $H_2S$ from sodium sulfate.

Fig. 4 is a graph showing release of $SO_2$ LiPt/$Al_2O_3$.

Fig. 5 is a graph showing a sulfur release rate with respect to a content of Rh + Pt + Pd.

Fig. 6 is a diagrammatic view of a DPF wherein the sulfur component oxidizing catalyst is supported on the upper-stream side of DPF and the sulfur component trapping agent is supported on the down-stream side of the DPF.

Fig. 7 shows an arrangement of the sulfur component trapping agent, which is disposed immediately after the engine.

Fig. 8 is a graph showing degradation of NOx trapping catalyst 1 depending on time.

Fig. 9 is a graph showing relationship between a sulfur trapping rate by the sulfur component trapping agent and sulfur purge frequency.

Fig. 10 is a graph showing an amount of sulfur component on the NOx trapping catalyst depending on gas atmosphere.

Fig. 11 is a graph showing regeneration of the sulfur component trapping agent by sulfur purging.

Fig. 12 is a diagrammatic view of the exhaust gas purification apparatus according to the present invention.

Best embodiments for practicing the invention:

(Investigations of sulfur component trapping agents)

As the sulfur component trapping agents, components that hardly release and discharge sulfur components even when a temperature of exhaust gas changes, which leads to temperature change of the sulfur component trapping agent were investigated.

Since the temperature of the exhaust gas varies from room temperature to 650 °C, the sulfates of the sulfur component trapping agents should preferably have a melting temperature or decomposition temperature of 750 °C or higher. When the melting temperature or decomposition temperature of the sulfates is 750 °C, decomposition of sulfates hardly occurs and release and discharge of sulfur components are prevented. Table 1 shows melting points or decomposition temperatures of various sulfates (Refer to Chemistry Encyclopedia: Basic Version II, Japan Chemical Society, Maruzen Publishing Co.).

Table 1: Melting points and decomposition temperatures

| Element for a sulfur trapping agent | Sulfate | Melting point (*; decomposition temperature) |
|---|---|---|
| Li | $Li_2SO_4$ | 1256 |
| Na | $Na_2SO_4$ | 884 |
| K | $K_2SO_4$ | 1069 |
| Rb | $Rb_2SO_4$ | 1060 |
| Cs | $Cs_2SO_4$ | 1010 |
| Mg | $MgSO_4$ | 1185 |
| Ca | $CaSO_4$ | 1450 |
| Sr | $SrSO_4$ | 1605 |
| Ba | $BaSO_4$ | 1580 |
| Mn | $MnSO_4$ | 700 |
| Ce | $Ce_2(SO_4)_3$ | 920* |
| Al | $Al_2(SO_4)_3$ | 770 |
| La | $La_2(SO_4)_3$ | 1150* |
| Fe | $Fe_2(SO_4)_3$ | 480* |
| Y | $Y_2(SO_4)_3$ | 1000* |
| Zn | $ZnSO_4$ | 600* |
| Co | $CoSO_4$ | 735 |
| Zr | $Zr(SO_4)_2 \cdot 4H_2O$ | 380* |
| Cu | $CuSO_4$ | 200 |
| Ni | $Ni_2SO_4$ | 848 |

From Table 1, it is considered that sulfates of alkali metals such as Li, Na, K, Rb, Cs, etc, alkaline earth metals such as Mg, Ca, Sr, Ba, etc and Ce, Al, Y, La, Ni, etc have high melting point or decomposition temperatures and they are suitable as the sulfur component trapping agents.

When the sulfur component trapping agent is the alkali metals or alkaline earth metals, for example, sulfates of the alkali metals or alkaline earth metals are produced by reaction according to the formula (1) when SOx contained in the exhaust gas in the lean air fuel ratio contacts with the sulfur component trapping agents.

As is discussed above, when the noble metals are present in the sulfur component trapping agents, release of sulfur components tends to occur at the time of rich air fuel ratio. Accordingly, the noble metals such as Rh, Pt, Pd, etc should preferably be not contained in the sulfur component trapping agents. A total amount of Rh + Pt + Pd should be 0.4 % by weight or less per a weight of the sulfur component trapping agent. An amount of the sulfur component trapping agents depends on kinds of fuels used and required performance.

Estimation on the total sulfur components exhausted from a diesel car for a running at a speed of 16000 km was made. If a fuel consumption is 20 km/L, an amount of light oil is 8000L. On the other hand, if a specific gravity of the light oil is 0.85g/cc and a concentration of sulfur components in the light oil is 10 ppm, a total sulfur exhausted is 2.1 moles. Accordingly, in order to trap all of the sulfur, 4.2 moles of $Na_2CO_3$ is required thereby to convert $Na_2CO_3$ to $Na_2SO_4$, when $Na_2CO_3$ is used as the sulfur component trapping agent.

On the other hand, when CaO is used as the sulfur component trapping agent, 2.1 moles of CaO is required to convert CaO to $CaSO_4$. Accordingly, when the alkali metals are used, at least 4.2 moles are necessary, and when the alkaline earth metals are used, at least 2.1 moles the alkali metals are necessary.

Although only the sulfur trapping components can be used in the sulfur component trapping agent, the sulfur trapping components may be supported on a porous support. The porous support may function to enhance dispersion of the sulfur trapping components. When the porous support is used, an amount of the sulfur trapping component, which is 0.2 mole part or less in a metallic element conversion per 1. 9 mole parts of the porous support, is insufficient for sulfur component trapping performance if a large amount of sulfur components is generated. If the amount of the sulfur trapping component is 0.8 mole part or larger, the sulfur component trapping agent tends to cohere on the porous support thereby to decrease the sulfur trapping capacity. Accordingly, an amount of the sulfur trapping components is preferably 0.2 to 0.8 mole part per 1.9 mole parts of the porous support.

In the specification, the words "mole part" are used to represent concentration rates of respective components in conversion of moles; if a supported amount of component B is 0.5 mole part per 1 mole part of component A, a mole ratio of the amount of B component to that of A component is 0.5, irrespective of an absolute amount of A component.

The porous support may be supported on a substrate; in this case, a preferable supporting amount of the support is 30 to 400 g per 1L of the substrate for the sulfur component trapping performance. If the supporting amount of the porous support is less than 30 g, the performance of the porous support will be insufficient, and if the supporting amount of the porous support is larger than 400 g, the specific surface area of the porous support itself becomes small. The above are not preferable.

If the amount of the porous support is too small, a sulfur trapping amount becomes small, and if the amount id too large, the specific surface area of the porous support becomes small.

As the porous supports, there are metal oxides or composite oxides of alumina, titania, silica, silica-alumina, zirconia, magnesia, etc. Alumina is particularly suitable because it is good in heat resistance and has a function of good dispersion of the sulfur trapping components thereon.

Various shapes of the sulfur component trapping agents and sulfur oxidizing catalysts may be employed in accordance with applications. Honeycomb structures produced by coating the sulfur component trapping agent and the sulfur component oxidizing agent on a honeycomb substrate made of cordierite, SiC, stainless, etc, or pellets, plates, granules, powders may be used. In the case of honeycomb structures, cordierite is the most preferable. However, if there is a possibility of temperature elevation of the catalyst, metallic substrates, which hardly react with the catalysts, would bring about good results. Further, it is possible to produce honeycombs made of only the sulfur component trapping agents and the sulfur component oxidizing agents.

(Investigations on NOx purification catalyst components)

Any NOx trapping catalysts that trap and purify NOx can be used; NOx trapping catalysts comprise at least one selected from alkali metals and alkaline earth metals and a noble metal, which trap NOx at high efficiency and high NOx purification performance.

Methods for preparing the catalysts include physical preparation methods and chemical reaction preparing methods such as impregnation methods, mixing methods, co-precipitation methods, sol-gel methods, ion-exchange methods, evaporation methods, etc.

As starting materials for the exhaust gas purification catalysts, various compounds, metals and metal oxides such as nitrate compounds, chelate complex compounds, hydroxides, carbonates, organic compounds, etc can be used.

(Investigations on trapping amounts in rich air fuel ratio)

Most of sulfur components in the exhaust gas are present in a form of SOx when the exhaust gas is in a lean air fuel ratio. On the other hand, when the air fuel ratio is rich, it is conceived that the sulfur components are present mainly as $H_2S$. Since a period of the rich air fuel ratio is shorter than that of the lean air fuel ratio, a large reduction in trapped sulfur components is not required unless the trapped sulfur components are released in the lean air fuel ratio. The reduction rate is defined as an amount of sulfur present after the sulfur trapping agent / an amount of sulfur flowing into the sulfur trapping agent $\times$ 100 (%).

When sulfur components are present in the form of $H_2S$, there is a case where degradation of NOx trapping catalysts by sulfur components is small. Considering that the NOx trapping catalysts are degraded by the reaction represented by the formula (1), degradation of the NOx catalyst is less problematic even if the reduction in the trapped sulfur components is low, when the amount of the sulfur components that enter the NOx trapping catalysts at the time of rich air fuel ratio is small is lowered.

Accordingly, if there is almost no lean air fuel ratio condition in a running mode of the internal combustion engine, it is possible to reduce an amount of sulfur component trapping agents of the exhaust gas purification apparatus thereby to lower the cost of the apparatus and to save space thereof.

Such sulfur component trapping agents as to trap 60 % of the sulfur components entering the sulfur component tripping agents are preferably used. The trapping rate of 85 % or more is more preferable. That is, when a temperature of the sulfur component trapping agent is set to 300 °C and gas consisting of 150 ppm $H_2S$ - 0.5 % $O_2$ - balance being $N_2$ is flown at a space velocity SV of 30,000/h for 1 hour, a sulfur component trapping agent having a trapping rate of 60 % or more should preferably be used; 85 % is more preferable.

The present invention provides an internal combustion engine provided with the sulfur component trapping agent. The above-mentioned DPF is provided with a sulfur component trapping agent as an example for trapping sulfur components. Further, an internal combustion engine equipped with the above-mentioned sulfur component trapping agent and the catalyst in the exhaust duct is operated under a lean air fuel ratio, and then the operation is switched to a rich or stoichiometric air fuel ratio, followed by switching to lean air fuel ratio to perform purification of the gas. If poisoning of the NOx trapping catalyst proceeds, a temperature at the entrance of the NOx trapping catalyst is elevated and gas of a stoichiometric or rich air fuel ratio is flown thereby to release sulfur components from the NOx trapping catalyst and regenerate the catalyst.

(Embodiments)

In the following embodiments of the present invention will be described. The present invention is not limited to these embodiments.

(Preparation methods of NOx catalyst)

After a slurry containing alumina powder and a precursor of alumina adjusted with nitric acid was coated on a cordierite honeycomb (400 cells/ in$^2$) and the coating was dried thereby to produce an alumina-coated honeycomb with an amount of alumina of 1.9 moles per 1 L of an appearance volume.

After the alumina-coated honeycomb was impregnated with a first impregnation component containing cerium nitrate, the honeycomb was dried at 120 °C, followed by calcining it at 600 °C for 1 hour. Then the Ce carrying honeycomb was impregnated with a second impregnation component mixture containing dinitrosodiamine platinum nitrate solution, dinitrosodiamine palladium nitric acid solution, rhodium nitrate solution and potassium acetate, and the honeycomb was dried at 200 °C, followed by calcining it at 600 °C for 1 hour. Then, the honeycomb impregnated with Ce, Rh, Pt, Pd and K was impregnated with a third impregnating component mixture containing potassium acetate, sodium nitrate, lithium nitrate and titanium sol. Thereafter, the honeycomb was dried at 200 °C, followed by calcining it at 600 °C for 1 hour. The potassium acetate in the second and third impregnation mixture was the same. At the final step, the honeycomb was treated in an electric oven at 700°C for 5 hours.

According to the above-mentioned procedure, a NOx trapping catalyst 1 was prepared wherein the composition was 190 g of alumina, 27 g of Ce, 12.4 g of Na, 15.6 g of K, 0.4 g of Li, 4.3 g of Ti, 0.139 g of Rh, 2.792 g of Pt and 1.35 g of Pd, in conversion of elements.

(Preparation of sulfur component trapping agent)

Sulfur component trapping agents were prepared from Li, Na, K, Cs, Mg, Ca, Sr, Ba, La and Fe, respectively. The alkali metals were used in the form of carbonates, alkaline earth metals were in the form of oxides, and $La_2O_3$ and FeO. Amounts of Li, Na, K, Cs, Mg, Ca, Sr, Ba, La and Fe were 1.5 moles per 1 liter of the honeycomb. In accordance with the same manner as in the preparation of the NOx trapping catalyst 1, sulfur component trapping agents were prepared wherein the above components were impregnated in the cordierite honeycombs to produce sulfur component trapping agents A, B, C, D, E, F, G, H, I and J.

(Embodiment 1: Installation of sulfur component oxidizing catalyst)

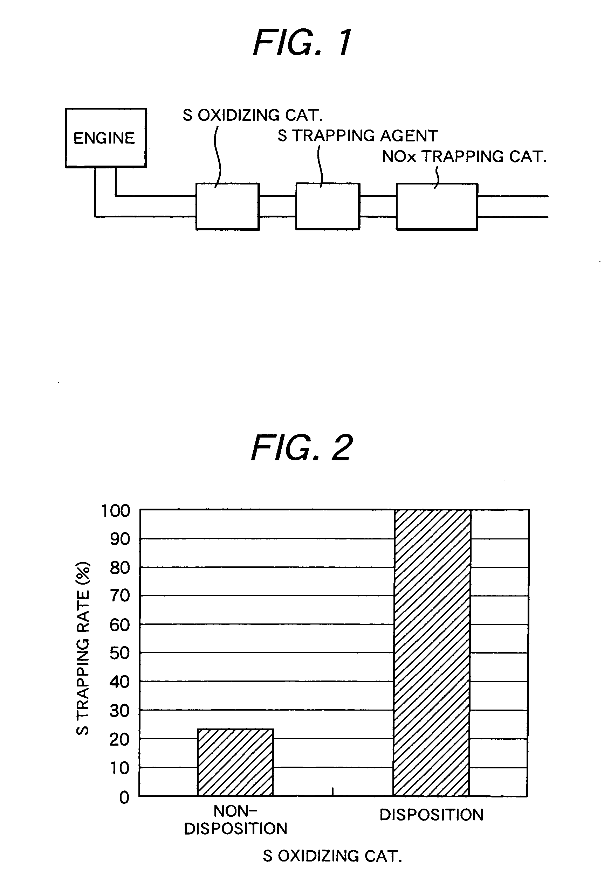

As shown in Fig. 1, the sulfur component trapping agent B ($Na_2CO_3$) was installed before the NOx trapping catalyst 1 in an engine exhaust gas duct. Further, a sulfur component oxidizing catalyst was disposed before the sulfur component trapping agent to constitute a purification apparatus. As the sulfur component oxidizing catalyst, $Al_2O_3$ with Pt prepared in the same manner as in the method for preparing the NOx trapping catalyst was used. The sulfur component oxidizing catalyst comprises 190 g of alumina per 1 liter of the honeycomb, 2.792 g of Pt, in conversion of elements.

In Fig. 1, a comparative embodiment 1 had no sulfur component oxidizing catalyst. SOx containing lean gas was supplied to the sulfur component trapping agents to evaluate sulfur trapping rates by the sulfur component trapping agents.

Temperatures of the sulfur component oxidizing catalysts and sulfur component trapping agents were 400 degrees and 300 °C, respectively. A flow rate of Sox containing lean gas was 3liters/min and concentration of $SO_2$ was 150 ppm. The flow time was 1 hour.

The composition of the lean gas supplied to the sulfur component trapping agents is shown in Table 2. The sulfur component trapping rates were calculated by the equation (6) below.

Sulfur component trapping rate (%) =

(Sulfur amount of sulfur components trapped by the sulfur component trapping agent, mole)/an inflow amount of sulfur to the Sulfur component trapping agent, mole) ×100 (%)

----- (6)

Table 2: Lean gas composition

| Gas components | Gas concentration (%) | Gas amount (mmol/h) |
|---|---|---|
| $O_2$ | 5 | 401.8 |
| $N_2$ | balance | balance |
| $SO_3$ | 150 ppm | 1.215 |

Fig. 2 shows sulfur component trapping rates in cases where the sulfur component oxidizing catalyst was disposed and was not. It is apparent from Fig. 2 that the disposition of the sulfur component oxidizing catalyst exhibits higher sulfur trapping rates with the sulfur component trapping agent.

As is disclosed in Japanese patent laid-open 11-169708, it has been known that Pt functions as a sulfur component oxidizing catalyst. Accordingly, when the sulfur component oxidizing catalyst is disposed, $SO_2$ oxidation reaction takes place as represented by the formula (4), and the sulfur components entering the sulfur component trapping agent are mainly $SO_3$. Since the bonding force of $SO_2$ to the sulfur component trapping agent is weaker than that of $SO_3$, $SO_2$ is hardly trapped. Thus, sulfur components in the form of $SO_3$ are more easily trapped than in the form of $SO_2$ gas. Accordingly, the disposition of the sulfur component oxidizing catalyst before the sulfur component trapping catalyst improves the sulfur component trapping rates, as is apparent from Fig. 2.

(Embodiment 2: Evaluation of sulfur component trapping performance of the sulfur component trapping agent)

In the system shown in Fig. 1, amounts of sulfur trapped by the sulfur component trapping agent were calculated in a thermodynamic method when SOx containing lean gas was supplied to the sulfur component trapping agent. As calculation software, MALT2 (thermodynamic database for personal computer; Japan Society of thermodynamics) was used.

A temperature of the sulfur component trapping agent was 300 °C. A flow rate of the SOx containing lean gas was 3 L/min. The sulfur components in the gas were oxidized to $SO_3$ by the sulfur component oxidizing catalyst disposed before the sulfur component trapping agent. Thus, a concentration of $SO_3$ was estimated as 150 ppm. A period of flow time was 1000 hours. Gas components other than $SO_3$ were shown in Table 3. The sulfur trapping rates were calculated by the equation (6).

Table 3: Sulfur trapping rates of the sulfur component trapping agents A, B, C, D, E, F, G, H, I and J.

| | Sulfur component trapping agent | Sulfur component trapping rate (%) |
|---|---|---|
| A | $Li_2CO_3$ | 100 |
| B | $Na_2CO_3$ | 100 |
| C | $K_2CO_3$ | 100 |
| D | $Cs_2CO_3$ | 100 |
| E | MgO | 100 |
| F | CaO | 100 |
| G | SrO | 100 |

(continued)

|  | Sulfur component trapping agent | Sulfur component trapping rate (%) |
|---|---|---|
| H | BaO | 100 |
| I | $La_2O_3$ | 100 |
| J | FeO | 0 |

From the above table, it is apparent that when the sulfur component trapping agents A to I are used, the sulfur trapping rates exceed 85%, which are sufficiently high. Accordingly, it is possible to sufficiently suppress the sulfur components entering the NOx trapping catalyst 1 disposed after the sulfur component trapping agent. Further, the sulfur component trapping agents A to I were converted into sulfates of alkali metals, alkaline earth metals and $La_2O_3$ by virtue of trapping sulfur components. The sulfur trapping reactions of the alkali metals and alkaline earth metals with sulfur components may be represented by the following formulae.

$$M_2CO_3 + SO_2 + 1/2O_2 \rightarrow M_2SO_4 + CO_2 \qquad (7)$$

(M: alkali metal)

$$M'O + SO_2 + 1/2O_2 \rightarrow M'SO_4 \qquad (8)$$

(M': alkaline earth metal)

The melting points or decomposition temperatures of the sulfates of alkali metals, alkaline earth metals and La sulfate are higher than 750 °C ; thus, once the sulfates are formed, they are not decomposed unless the temperature becomes above 750 °C. Accordingly, if the temperature of the sulfur component trapping agents is below 750°C, the sulfur components trapped by they are not released again even when a normal temperature rise of the exhaust gas.

(Embodiment 3: Evaluation on decomposition sulfates of sulfur component trapping agents)

Decomposition of sulfates of the sulfur component trapping agents was evaluated. Sulfates/$Al_2O_3$ prepared by drying and mixing various sulfates and $Al_2O_3$ were used. A concentration of the sulfur component trapping agents per 10 grams of alumina was 0.04 mol in conversion of elements.

As samples of sulfates of the sulfur component trapping agents, sulfates of alkali metals, alkaline earth metals, and sulfates of Ce, Al, La, Y and Ni were chosen.

Powders of the above sulfur component trapping agents were granulated into 0.85 to 1.70 mm diameter. The temperature of the sulfur trapping agents was kept at 300 °C and the rich gas shown in Table 4 was flown through the trapping agents, while elevating a temperature of from 250 to 750 °C. Concentrations of sulfur components ($SO_2 + H_2S$) released from the trapping agents were measured. A space velocity SV of the gas was 30,000/h.

Table 4: Gas composition

|  | Composition (Rich air fuel ratio) |
|---|---|
| $N_2$ | Balance |
| $H_2$ | 3000 ppm |
| CO | 3.5 % |
| $O_2$ | 3000 ppm |
| $C_3H_6$ | 600 ppm |

Decomposition performance of the sulfur component trapping agents was calculated in accordance with the following equation.

```
Sulfur component release rate (%) =

    (an amount of sulfur released until 750 ℃ (mol)/(an

amount of sulfur trapped by the trapping agent mol) ✕ 100 (%)

-----(9)
```

The results are shown in Table 5 below.

Table 5: Evaluation on decomposition performance of sulfates of sulfur trapping agents

| Sulfur trapping agent | Sulfate | Sulfur component release rate (%) |
|---|---|---|
| Li | $Li_2SO_4$ | 1 |
| Na | $Na_2SO_4$ | 0 |
| K | $K_2SO_4$ | 0 |
| RB | $Rb_2SO_4$ | 0 |
| Cs | $CS_2SO_4$ | 0 |
| Mg | $MgSO_4$ | 2.5 |
| Ca | $CaSO_4$ | 2.5 |
| Sr | $SrSO_4$ | 2 |
| Ba | $BaSO_4$ | 1.5 |
| Ce | $Ce_2(SO_4)_3$ | 4 |
| Al | $Al_2(SO_4)_3$ | 4.5 |
| La | $La_2(SO_4)_3$ | 3 |
| Y | $Y_2(SO_4)_3$ | 3 |
| Ni | $NiSO_4$ | 4.5 |

It is apparent from Table 5 that the sulfur component release rates of the sulfur component trapping agents are 5 % or less; the sulfur components trapped by the sulfur component trapping agents are hardly released and the trapping agents are suitable for the sulfur component trapping agents.

(Embodiment 4: Influence of coexistence of noble metals)

Influence of coexistence of noble metals and the sulfate ($Na_2SO_4$) in the trapping agent B on decomposition of the sulfate was evaluated.

$Na_2SO_4$ was impregnated with a Pd solution, and the impregnated $Na_2SO_4$ was dried at 160 °C, followed by calcining it at 600 °C for 1 hour. The resulting was mixed with dried $Al_2O_3$ to prepare a Pd containing catalyst ($Na_2SO_4$ -Pd/$Al_2O_3$). A catalyst ($Na_2SO_4$/$Al_2O_3$) was prepared in the same manner as in the above, except for not containing Pd. The above catalysts were used in the evaluation. Concentration of Na and Pd were 0.04 mol of Na and 0.15 g of Pd per 10 g of $Al_2O_3$, in conversion of elements.

Powders of the above catalysts were granulated into 0.85 to 1.70 mm in diameter. The temperature of the catalysts was kept at 300 °C and rich gas was flown through the catalysts, while elevating temperatures from 250 to 800 °C to measure amounts of sulfur components ($SO_2$ + $H_2S$) released from the catalysts. The space velocity SV of the gas was 30,000/h.

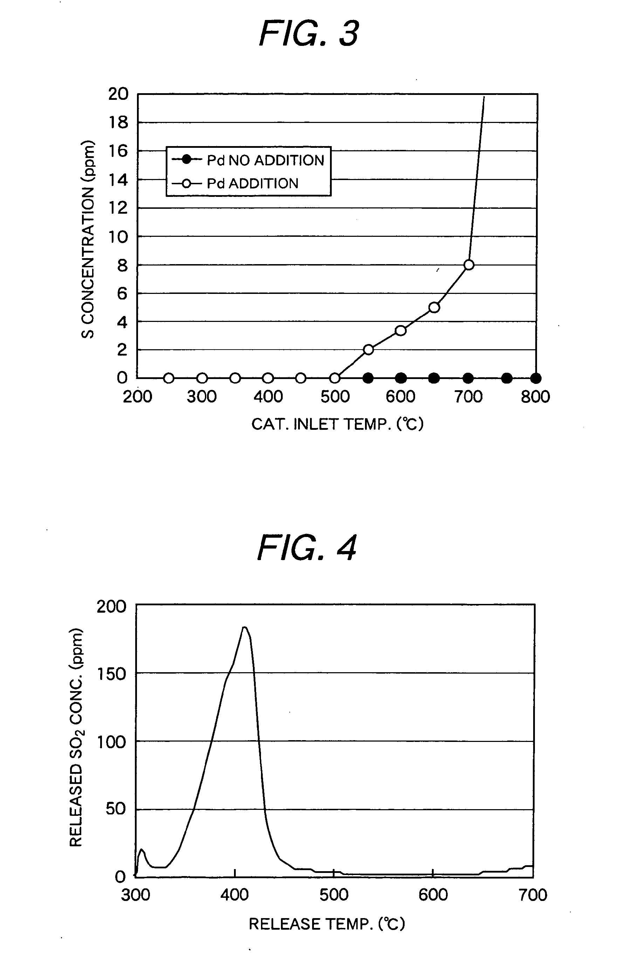

Fig. 3 shows the results. In the case of Pd impregnation, when the temperature of the catalysts exceeds 500 °C, release of sulfur components was observed. This means decomposition of the sulfates. As the temperature of the catalysts elevates, amounts of released sulfur components increased; the amount of released sulfur components around 750 °C was over 200 ppm.

On the other hand, in the case of the catalyst not containing Pd, release of sulfur component was not observed when the temperature was elevated to 800 °C. In the case of Pd impregnation, an amount of released sulfur until 800 °C was 9 % per an amount of sulfur, which was originally contained in the catalyst. From the above fact, when Pd is impregnated, decomposition of sodium sulfate takes place at a temperature of 500 °C or higher.

If the noble metals and the sulfur component trapping agents are in contact, release of the trapped sulfur components occurs when the rich gas flows thereby to bring about poisoning of the NOx trapping catalyst 1. Accordingly, it is preferable that the sulfur component trapping agents do not contain noble metals.

(Embodiment 5: Influence of coexistence of noble metals)

Decomposition performance of lithium sulfate using a sulfur component trapping agent comprising $LiPt/Al_2O_3$, which was prepared in the same manner as of the NOx trapping catalyst, was evaluated. Additive amounts were 190 g of alumina per 1 L of the honeycomb, 1.8 g of Li and 2.792 g of Pt, in conversion of elements.

A temperature of the $LiPt/Al_2O_3$ catalyst was set to 300 °C, and a lean model gas whose composition is shown in Table 6 was flown for 1 hour thereby to cause the catalyst to absorb sulfur components. Considering that the sulfur component trapping agent is installed in the system shown in Fig. 1, the sulfur components to be flown through the trapping agent $LiPt/Al_2O_3$ was $SO_3$.

While the rich gas whose composition is shown in Table 6 was being flown through the catalyst, the temperature of the gas was elevated from 300 to 700 °C; then concentrations of $SO_2$ released from the $LiPt/Al_2O_3$ catalyst were measured. The space velocity SV of the gas was 30,000/h at lean and rich conditions.

Fig. 4 shows the results. A peak is observed around 400 °C. It is assumed that the decomposition reaction of sulfates takes place around that temperature.

On the other hand, decomposition temperatures of $Li_2SO_4$ and $Al_2(SO_4)_3$ are 1256 °C and 770 °C, respectively. Accordingly, it is conceivable that the decomposition of sulfate, which took place at 400 °C, was caused by Pt added to the catalyst. That is, when the noble metals and the sulfur component trapping agents are in contact, release of trapped sulfur components takes place at the time of flowing the rich gas thereby to bring about poisoning of the NOx trapping catalyst. Accordingly, the sulfur component trapping agents should not contain the noble metals.

Table 6: Gas composition

|  | Gas composition | |
|---|---|---|
|  | Lean | Rich |
| $N_2$ | balance | balance |
| $CO_2$ | 10 % | 12 % |
| $H_2O$ | 10 % | 10 % |
| $H_2$ | 0 ppm | 3000 ppm |
| CO | 1000 ppm | 6000 ppm |
| $O_2$ | 5 % | 5000 ppm |
| $C_3H_8$ | 500 ppm | 600 ppm |
| $SO_3$ | 150 ppm | 0 ppm |
| NO | 600 ppm | 1000 ppm |

(Embodiment 6: Quantitative influence of coexistence of noble metals)

A $KNaRhPtPd/Al_2O_3$, which was prepared in the same manner as in the method of preparing the NOx trapping catalyst 1, was used as the sulfur component trapping agent, and its sulfur component release performance was evaluated. Compositions of the trapping agents were 190 g of alumina per 1L of the honeycomb, 12.4 g of Na and 15.6 g of K, in conversion of elements, and noble metals (Rh + Pt + Pd), wherein the total amounts of noble metals were 0 % by weight, 0.3% by weight and 0.7 % by weight per the weight of the sulfur component trapping agent. Weight ratios of Rh, Pt and Pd were 1: 20: 10.

After the entrance temperature of the $KNaRhPtPd/Al_2O_3$ was set to 300 °C, the model gas shown in Table 7 was fed though the sulfur component trapping agent for 2 hours, then the temperature was elevated to 650 °C, followed by letting the rich model gas flow for 10 min. Sulfur release rates were measured.

Considering that the sulfur component trapping agent is installed in the system shown in Fig. 1, the sulfur components entering the sulfur component trapping agent in lean air fuel ratio was $SO_3$. The space velocity SV of the gas in lean and rich periods was 30,000/h.

Table 7 (Gas composition)

|         | Gas composition | |
|---------|---------|---------|
|         | Lean | rich |
| $N_2$   | Balance | balance |
| $CO_2$  | 10 % | 12 % |
| $H_2O$  | 10% | 10 % |
| $H_2$   | 0 ppm | 3000 ppm |
| CO      | 1000 ppm | 3.5 % |
| $O_2$   | 5 % | 3000 ppm |
| $C_3H_6$ | 500 ppm | 600 ppm |
| $SO_3$  | 300 ppm | 0 ppm |
| NO      | 600 ppm | 1000 ppm |

The sulfur component release rates were calculated in accordance with the equation (10).

$$\text{Sulfur component release rate (\%)} =$$

$$\frac{\text{An amount of sulfur released from the sulfur trapping agent in a rich period (mol)}}{\text{an amount of sulfur released from the sulfur trapping agent in a lean period (mol)}} \times 100 \text{ (\%)}$$

$$\text{---- (10)}$$

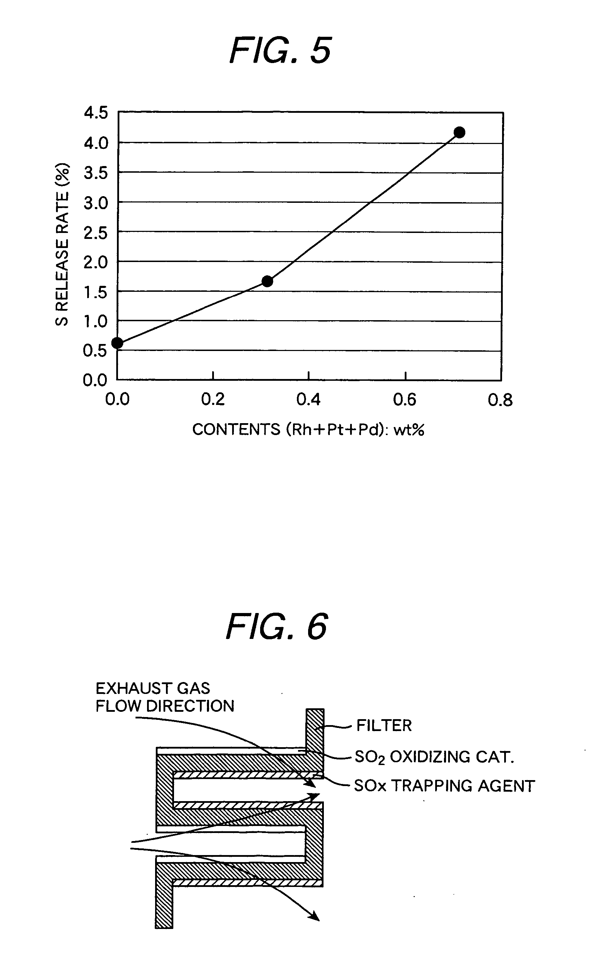

Fig. 5 shows the results. When the amount of Rh + Pt + Pd is 0.4 % by weight or less, the release rate of sulfur component is less than 2 %, and the sulfur component trapping agent exhibits a high sulfur component retention performance. Accordingly, in order to expect a high sulfur component retention performance, the total amount of Rh + Pt + Pd should be 4 % by weight or less.

(Embodiment 7: Support on a filter)

As a method of arranging the sulfur component oxidizing catalysts before and after the sulfur component trapping agent, a filter can be utilized. As the filter, there may be exemplified diesel particulate filters (DPF), which have been used for removing particle material (PM).

For example, the sulfur component oxidizing catalyst is supported on a surface of the upper stream side of the DPF and the sulfur component trapping agent is supported on a surface of the downstream side of the filter. By this arrangement, it is possible to oxidize the exhaust gas to form $SO_3$ when the exhaust gas enters DPF so that the $SO_3$ can be trapped by the sulfur component trapping agent. In this case, if the noble metals are used as the sulfur component oxidizing catalyst, decomposition of sulfates of the sulfur component trapping agent does not take place and flowing-out of the trapped sulfur does not occur even when the air fuel ratio becomes rich, because the noble metals are not in contact with the sulfur component trapping agent.

When the sulfur component oxidizing catalyst and the sulfur component trapping agent are disposed with a distance, there may be a problem that the formed $SO_3$ may adhere to a wall of the gas passage thereby to damage the gas passage; on the other hand, in the case of filters, the above problem may be removed, because the formed $SO_3$ is immediately trapped. Since the both faces of the filters can be utilized, the space can be reduced, compared with the case where the sulfur component oxidizing catalyst and the sulfur component trapping agent are separately arranged.

The present invention can be applied to diesel exhaust gas, wherein PM contained in the gas includes solid substance such as soot, sulfates and mists, which contain sulfur components. When the filters are used, these solid and liquid sulfur components as well as sulfur components in the gas phase are removed thereby to remarkably increase trapping performance of the sulfur component trapping agent.

Any filters may be employed as long as they perform the above functions. Materials for the filters may include cordierite, stainless steel, SiC, etc. Various shapes of the filters may be employed. For Example, cross sections thereof may be circular, rectangular, elliptic, etc.

The sulfur component oxidizing catalyst and sulfur component trapping agent may be supported on filters by any proper manners such as wholly or partially supported on the filter surface in accordance with objects expected.

Fig. 6 shows a sectional view of a DPF (diesel particulate filter), which employs the sulfur component oxidizing catalyst and the sulfur component trapping agent. The sulfur component oxidizing catalyst is supported on the upstream side face of the filter and the sulfur component trapping agent is supported on the downstream side face of the filter. When exhaust gas enters DPF, it is oxidized by the sulfur component oxidizing catalyst to form $SO_3$ and the resulted $SO_3$ is contacted with the sulfur component trapping agent. When the noble metals are used as the sulfur component oxidizing catalyst, the sulfates of the sulfur component trapping agent by the noble metals in the rich air fuel ratio condition does not occur and release of sulfur components does not occur as well, because the noble metals do not contact with the sulfur component trapping agent.

When the sulfur component oxidizing catalyst and sulfur component trapping agent are disposed separately, produced $SO_3$ adheres to the passage walls thereby to degrade the passage material. However, in the above-mentioned filter PDF there is no problem because the formed $SO_3$ is immediately trapped.

Since the both faces of the filter are utilized, the space for the filter is smaller than the case where the catalyst and the trapping agent are separately disposed.

The exhaust gas from the diesel engines contains solid matters such as soot, sulfates, etc and mists. These substances contain the sulfur components. Since the filters can remove these solid or liquid matters as well as sulfur components in the gas phase, the sulfur component trapping performance is remarkably improved.

(Embodiment 8: Installment of the sulfur trapping agent just below an engine)

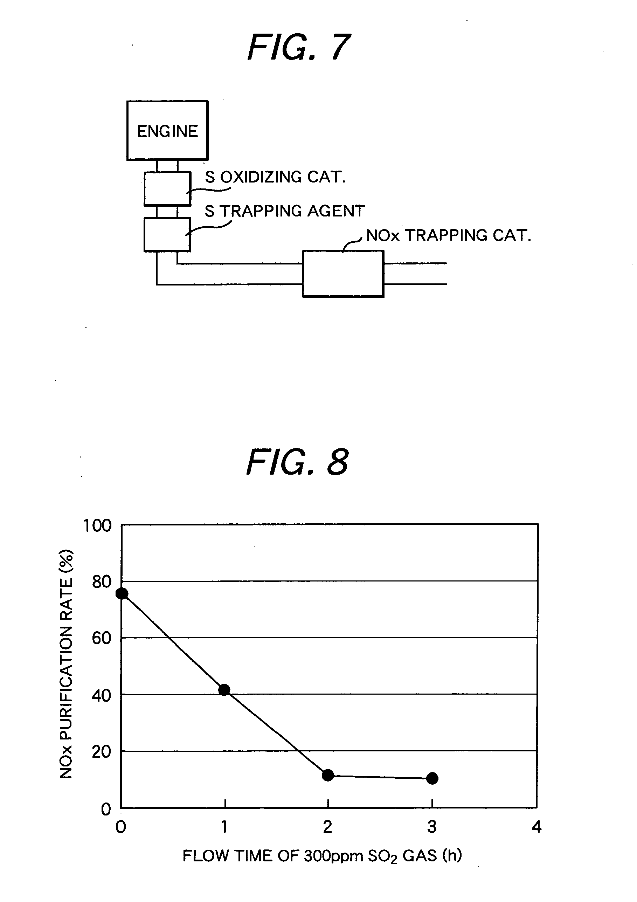

Fig. 7 shows a diagrammatic view of an arrangement where the honeycomb type sulfur component trapping agent is disposed just below the engine. The words "just below the engine" are used to mean a position which is as close to the engine as possible. For example, the position is within 1 m from an exhaust manifold entrance port. The NOx trapping catalyst may be disposed vertically.

In disposing the sulfur component trapping agent beneath a floor, a space is necessary in the floor. On the other hand, in disposing the sulfur trapping agent below the engine the space in the floor is not necessary so that a car room becomes wide.

The exhaust gas from an engine contain, which condenses. If the sulfates are formed on the sulfur component trapping agent, the sulfates dissolve into condensed water, which may be discharged as sulfuric acid into the downstream. This phenomenon leads to corrosion of the passage and degradation of the NOx trapping catalyst disposed after the sulfur component trapping agent.

When the sulfur component trapping agent is disposed just below the engine, a temperature of the sulfur component trapping agent tends to elevate thereby to prevent condensation of water. When the sulfur component trapping agent disposed just below the engine is a honeycomb type structure, the condensed water does not stay in the honeycomb structure to prevent the above problem, because a direction of the gas passages is vertical the ground.

(Embodiment 9: Estimation of S purge frequency)

It is difficult to completely prevent sulfur components from entering the NOx trapping catalyst disposed after the sulfur component trapping agent. Accordingly, degradation of performance of the NOx trapping catalyst to which the sulfur components adhere after a lapse of a long period of time even when the sulfur component trapping agent is disposed; thus the NOx trapping catalyst should be subjected to S purge.

An $SO_2$ containing model lean gas whose composition is shown in Table 6 was flown through the NOx trapping catalyst 1 so as to evaluate degradation of the catalyst by sulfur components. The temperature at the entrance of the catalyst was set to 300 °C, and the space velocity of the gas was 30,000/h. Fig. 8 shows degradation rates of catalytic activity of the catalyst with respect to treatment time. The NOx purification rate was calculated by the following equations.

NOx purification rate (%) =

{(an amount of NOx entered the catalyst within 1 min. after switching to lean condition) - (an amount of NOx flowing-out from the catalyst within 1 min. after switching to lean condition)}/ an amount of NOx flowing-out from the catalyst within 1 min. after switching to lean condition) $\times$ 100

---(11)

From the above results, it is apparent that when the $SO_2$ containing lean model gas is flown through the catalyst for 1 hour, the catalytic activity lowers to 40 %, which necessitates S purge.

When a lean model gas containing 300 ppm of $SO_2$ is flown through the catalyst for 1 hour, an amount of entering sulfur components is 2.4 mmoles. Estimation of an amount of sulfur components entering the catalyst in a conventional exhaust gas purification apparatus is made under conditions that a concentration of sulfur components in gasoline is 10 ppm and fuel consumption is 10 km/L, the above entering amount of sulfur components is equivalent to a running for 90.6 km. Accordingly, one S purge is required for every 90.6 km running.

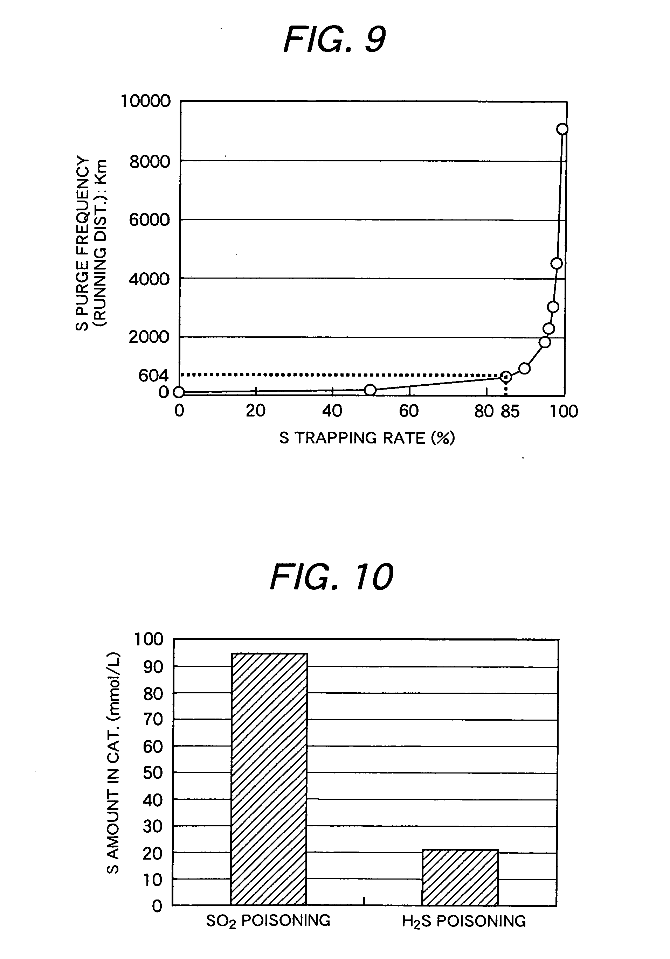

If the S concentration in the exhaust gas is lowered by the sulfur component trapping agent in the system shown in Fig. 1 to thereby lower the S concentration of the gas entering the catalyst 1 to 1.5 ppm, the S purge is required for every 9060 km. In accordance with the above theory, relationship between calculation results of trapping rates of sulfur components in lean condition and frequency of S purge is shown in Fig. 9. The sulfur component trapping rate was calculated by the equation (6). The S purge frequency represents a distance between two S purges.

From Fig. 9, it is apparent that when the S trapping rate exceeds 85 %, the S purge frequency exceeds 604 km. Accordingly, this value is 6 times or more of that where the sulfur component trapping agent is not disposed. Thus, the advantage of the sulfur component trapping agent is remarkable.

(Embodiment 10: Evaluation of poisoning depending on gas atmosphere)

Lean gas and rich gas whose compositions are shown in Table 8 were flown through the NOx trapping catalyst 1 for 1 hour. A temperature at the entrance of the catalyst was 300 °C and the space velocity was 30,000/h. In the lean gas the sulfur components present in the form of $SO_2$, and in the rich gas the sulfur components present in the form of $H_2S$ .

Table 8: Released gas from NOx trapping catalyst

|  | Gas composition | |
| --- | --- | --- |
|  | lean | Rich |
| $N_2$ | balance | balance |
| $CO_2$ | 10 % | 12 % |
| $H_2O$ | 10 % | 10 % |
| $H_2$ | 0 ppm | 3000 ppm |
| CO | 1000 ppm | 3.5 % |
| $O_2$ | 5 % | 3000 ppm |
| $C_3H_6$ | 500 ppm | 600 ppm |
| NO | 600 ppm | 1000 ppm |
| $SO_2$ | 150 ppm | 0 ppm |
| $H_2S$ | 0 ppm | 150 ppm |

Fig. 10 shows amounts of sulfur adhered to the NOx trapping catalyst 1. When the catalyst is poisoned by $SO_2$ (lean gas), the amount of adhesion of S is about 4 times that in case of poisoning by $H_2S$ (rich gas). Accordingly, poisoning by the lean gas goes faster than in the case of the rich gas.

Suppose the sulfur component trapping agent is used in the system shown in Fig. 1. If a sulfur component trapping rate is 90 %, 10 % of sulfur components outflows from the sulfur component trapping agent. In view of facts that 90 % of the sulfur component trapping arte is sufficient and the S poisoning by lean gas is 4 times that by rich gas, $(100 - 10 \times 4 = 60 \%)$ or more of the trapping rate of the S component trapping trapped by the sulfur component trapping agent in case of rich gas is preferable.

(Embodiment 11: Spurge)

Elevation of temperature of the exhaust gas is necessary at the time of S purge. If the elevation is too much and the temperature exceeds the melting point or decomposition temperature of the sulfates, release of sulfur from the sulfur component trapping agent takes place. Accordingly, S purge should be carried out at a temperature as low as possible. For example, the S purge should preferably be carried out at a temperature of 500 to 700 °C at the NOx trapping catalyst entrance.

In the arrangement shown in Fig. 1, used were the Pt added $Al_2O_3$ catalyst in Embodiment 1 as the sulfur component oxidizing catalyst and the trapping agent B as the sulfur component trapping agent. Under the same conditions as in embodiment 8, the NOx trapping catalyst 1 was subjected to S purge in the rich gas flow after the activity of the NOx trapping catalyst was decreased to 40 %. The rich gas whose composition is shown in Table 6 was supplied for 10 min to the NOx trapping catalyst 1 of which activity was decreased to 40 % at a temperature of 300 °C at the NOx trapping catalyst entrance. A temperature of the NOx trapping catalyst during the rich gas flow was 650 °C.

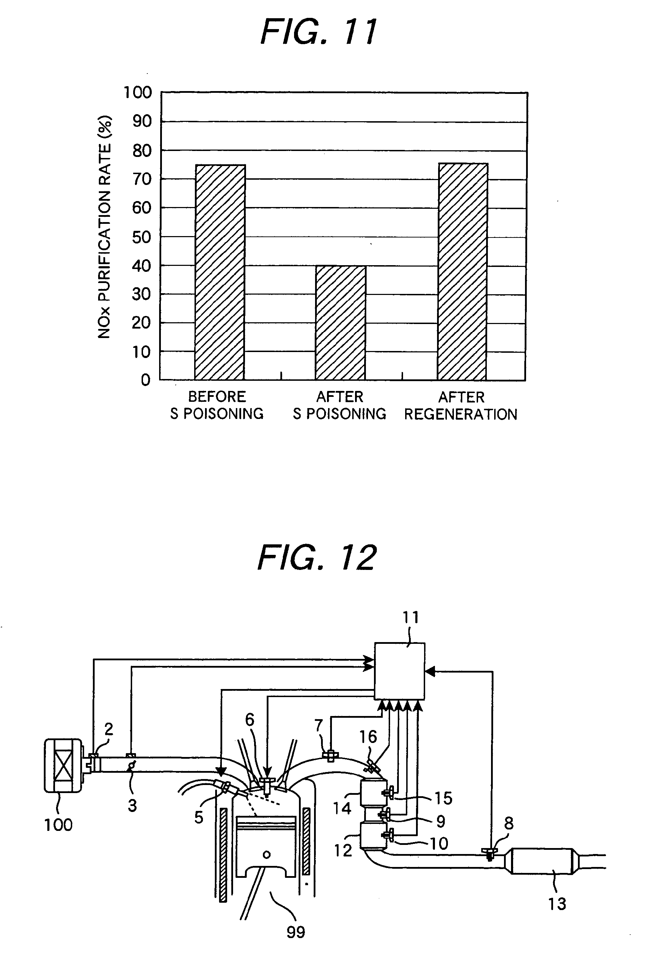

Fig. 11 shows the results. The NOx purification rate was calculated by the equation (11). Activity of the NOx trapping catalyst 1 was regenerated by flowing rich gas for 10 min to the activity before supply of the sulfur components.

In view of the fact that in embodiment 3, decomposition of the trapping agent B did not occur until 800 °C in addition to the above fact, it is apparent that release of the sulfur components from the sulfur component trapping agent does not occur thereby to regenerate the NOx trapping catalyst, when the temperature of the sulfur component trapping agent is set to 750 °C and the temperature of the NOx trapping catalyst 1 is set to 650 °C at the time of S purge.

(Embodiment 12: Diagnosis of degradation of sulfur component trapping agent)

Since the sulfur component trapping agent of the present invention is not one that is used and regenerated as in the conventional sulfur trapping materials, it is necessary to replace the sulfur component trapping agent with new one or a part of the exhaust gas purification apparatus is replaced. The present invention provides a system for indicating information on timing of replacement of the sulfur component trapping agent, wherein the degree of degradation of the sulfur component trapping agent is estimated by the following method. When the sulfur component trapping agent degrades, degradation of the NOx trapping catalyst disposed after the sulfur component trapping agent proceeds. Therefore, there is a correlation between the degree of degradation of the sulfur component trapping agent and poisoning speed of the NOx trapping catalyst by sulfur.

When S purge is applied to the NOx trapping catalyst, the degree of regeneration of activity of the NOx trapping catalyst greatly poisoned by sulfur is large. Accordingly, the degradation of the NOx trapping catalyst by sulfur can be estimated by the degree of regeneration of activity caused by S purge, and from that result degree of degradation of the sulfur component trapping agent can be estimated.

That is, when NOx purification rates after regeneration and before regeneration of the catalyst are measured and when a difference or a ratio between them becomes over a certain value, there is provided an apparatus for diagnosing degradation that indicates replacement of the sulfur component trapping agent and a replacement supporting system.

In order to make the replacement easy, the sulfur component trapping agent and a part of the NOx purification catalyst may be made detachable. According to the embodiment, the exhaust gas purification apparatus of the present invention can be used for a long time keeping effective purification performance.

(Embodiment 13: Constitution of internal combustion engine)

Fig. 12 shows a schematic diagram of an embodiment of an internal combustion engine equipped with the exhaust gas purification apparatus of the invention.

The exhaust gas purification apparatus of the invention comprises an engine 99, which is capable of lean burn combustion, an air-intake system comprising an air flow sensor 2, a throttle valve 3, etc; an exhaust gas system comprising an oxygen concentration sensor or A/F sensor 7, a gas temperature sensor 8 for a NOx trapping catalyst entrance, a gas temperature sensor 9 for a sulfur component trapping agent entrance, a temperature sensor 10 for a sulfur component trapping agent, the sulfur component trapping agent 12, a NOx trapping catalyst 13, a sulfur component oxidizing catalyst 14, a temperature sensor 15 for the sulfur component oxidizing catalyst, a temperature sensor 16 for the sulfur component oxidizing catalyst entrance, etc, a control unit (ECU) 11, etc. ECU is constituted by I/O for an interface of input and output, LSI, a calculation device MPU, memory devices RAM and ROM that memory a large number of control programs, a timer counter, etc.

The above-mentioned exhaust gas purification apparatus works as follows. An intake air amount into the engine is measured by the air flow sensor 2 after filtering with an air cleaner 1'. It flows through the throttle valve 3 and an injector 5 where the air is injected with fuel; then the mixed gas is supplied to the engine 99. Signals from the air flow sensor and other sensors are input into the engine control unit ECU.

Running conditions of the internal combustion engine and conditions of the NOx trapping catalyst, etc are evaluated by ECU to decide air fuel ratio and injection time, etc of the injector 5 are controlled to concentration of the fuel to a predetermined values. The mixed gas intaken into cylinders is ignited by ignition plugs 6, which are controlled by signals from ECU 11 to combust air/fuel mixture.

Combustion exhaust gas is introduced into an exhaust gas purification system. The exhaust gas purification system is provided with the exhaust gas purification catalyst 13 for lean burn combustion, wherein NOx, HC and CO in the exhaust gas are purified by three way function of the catalyst in stoichiometric combustion running. In lean combustion running, NOx is purified by its NOx trapping function and HC and CO are purified by burning them by the catalyst. When the exhaust gas contains SOx, the sulfur components are oxidized by the sulfur component oxidizing catalyst and then almost all of the oxidized sulfur components is removed, followed by introducing the gas into the catalyst 13. If the catalyst 13 is partially poisoned by Sox to lower the NOx trapping performance, the NOx trapping performance of the catalyst 13, which is normally monitored during the lean combustion is recovered by shifting the air fuel ratio of the gas to a rich side in response to judging signals and control signals from ECU. At the same time, the temperature of the catalyst 13 may be elevated in response to the judging signals and control signals from ECU to cause the sulfur components to release from the catalyst 13 so that the catalyst 13 is regenerated.

According to the above-described operation, exhaust gases over the entire operation conditions including lean and stoichiometric (including rich) operations are effectively purified.

**Claims**

1. An exhaust gas purification apparatus disposed in an exhaust gas passage of an internal combustion engine having a NOx purification catalyst, which comprises a sulfur component trapping agent for trapping sulfur components, which is arranged before the NOx trapping catalyst and a catalyst for oxidizing the sulfur components, disposed before the sulfur component trapping agent, wherein the sulfur component trapping agent does not substantially release the trapped sulfur components under the conditions of the internal combustion engine.

2. An exhaust gas purification apparatus for an internal combustion engine, which comprises an exhaust gas passage for an internal combustion engine into which exhaust gas of lean air fuel ratio and rich or stoichiometric air fuel ratio flows, a NOx trapping catalyst that functions to trap NOx in the exhaust gas when the air fuel ratio is lean, a sulfur component trapping agent for trapping sulfur components in the exhaust gas, which is disposed before the NOx trapping catalyst, and a catalyst for oxidizing the sulfur components, which is disposed before the sulfur component trapping agent, wherein the sulfur component trapping agent has a trapping rate of 85 % or more of an amount of inflow sulfur in a trapping test at a flow rate of 150 ppm $SO_3$- 5% $O_2$ - balance being $N_2$ gas per 1.5 moles of the sulfur component trapping agent at 300 °C and a space velocity of 30,000/h for 1 hour;
and the sulfur component trapping agent has a release rate of sulfur amount of 5 % or less of sulfur trapped in the sulfur component trapping agent in a release test under a flow of a 3000 ppm $H_2$ - 600 ppm $C_3H_6$ - 3000 ppm $O_2$ - 3.5 % CO - balance being $N_2$ gas at a temperature elevation rate of 10 °C/min from 250 to 750°C at an sulfur component trapping agent entrance, after the trapping test.

3. An exhaust gas purification apparatus for an internal combustion engine, which comprises an exhaust gas passage for an internal combustion engine into which exhaust gas of lean air fuel ratio and rich or stoichiometric air fuel ratio flows, a NOx trapping catalyst that functions to trap NOx in the exhaust gas when the air fuel ratio is lean, a sulfur component trapping agent for trapping sulfur components in the exhaust gas, which is disposed before the NOx trapping catalyst, and a catalyst for oxidizing the sulfur components, which is disposed before the sulfur component trapping agent, wherein the sulfur component trapping agent has a trapping rate of 60 % or more of an amount of inflow sulfur in a trapping test at a flow rate of 150 ppm $H_2S$ - 0.5% $O_2$ - balance being $N_2$ gas at 300 °C of the sulfur trapping agent and a space velocity of 30,000/h for 1 hour.

4. An exhaust gas purification apparatus for an internal combustion engine, which comprises a NOx trapping catalyst for trapping NOx, which is disposed in an exhaust gas passage, a sulfur component trapping agent disposed before the NOx trapping catalyst for trapping sulfur components, and a catalyst disposed before the sulfur component trapping agent for oxidizing the sulfur components, wherein the sulfur component trapping agent contains at least one of alkali metals and alkaline earth metals and a total amount of Pt, Pd and Rh is at least 0.4 % by weight of the sulfur component trapping agent.

5. The exhaust gas purification apparatus according to any one of claims 1 to 4, wherein the sulfates contained in the sulfur component trapping agent has a melting temperature or decomposition temperature of 750 °C or higher.

6. The exhaust gas purification apparatus according to any one of claims 1 to 5, wherein the sulfur component trapping agent is disposed below the engine.

7. The exhaust gas purification apparatus according to claim 1, which further comprises a filter disposed in upstream of the NOx trapping catalyst, wherein an upstream side of the filter is provided with a catalyst for oxidizing the sulfur components and a downstream side of the filter is provided with the sulfur component trapping agent.

8. The exhaust gas purification apparatus according to any one of claims 1 to 5, which further comprises a filter disposed at upstream of the NOx trapping catalyst, wherein the sulfur component trapping agent if formed on part of the filter, and the catalyst for oxidizing sulfur components is formed on another part of the filter.

9. The exhaust gas purification apparatus according to claim 4, wherein an amount of the alkali metals or the alkaline earth metals is 1 to 4 moles or less in terms of (alkali metals /2 + alkaline earth metals).

10. The exhaust gas purification apparatus according to any one of claims 1 to 9, wherein the catalyst for oxidizing sulfur components contains at least one of Pt, Pd and Rh.

11. The exhaust gas purification apparatus according to any one of claims 1 to 10, wherein the NOx trapping catalyst contains at least one of alkali metals and alkaline earth metals and at least one of noble metals, and has a function to trap SOx under a lean air fuel condition and a function to release SOx in a rich or stoichiometric air fuel condition by heating the catalyst to 500°C or higher.

12. The exhaust gas purification apparatus according to any one of claims 1 to 11, wherein the sulfur component trapping agent is replaceable with another.

13. A sulfur component trapping agent containing an ingredient for trapping sulfur components in an exhaust gas, wherein the ingredient has a trapping rate of 85 % or more of an amount of inflow sulfur in a trapping test at a flow rate of 150 ppm $SO_3$ - 5% $O_2$ - balance being $N_2$ gas per 1.5 moles of the sulfur trapping agent at 300 °C and a space velocity of 30,000/h for 1 hour;
and the sulfur component trapping agent has a release rate of sulfur amount of 5 % or less of sulfur trapped in the sulfur component trapping agent in a release test under a flow of a 3000 ppm $H_2$ - 600 ppm $C_3H_6$ - 3000 ppm $O_2$ - 3.5 % CO - balance being $N_2$ gas at a temperature elevation rate of 10 °C/min from 250 to 750 °C at an sulfur component trapping agent entrance, after the trapping test.

14. The sulfur component trapping agent according to claim 13, wherein the sulfur component trapping agent contains at least one selected from the group consisting of alkali metals, alkaline earth metals, Ce, A1, Y, La and Ni.

15. A sulfur component trapping agent for trapping sulfur in an exhaust gas, which comprises a honeycomb substrate made of cordierite or metal, a porous support, and a sulfur trapping agent supported on the porous support, wherein the sulfur trapping agent contains 1 to 4 moles of at least one of alkali metals and alkaline earth metals in (molar number of alkali metals /2 + molar number of alkaline earth metals) as conversion of elements, and the total amount of Pt + Pd + Rh is 0.4 % by weight or more per the sulfur component agent.

16. A method of purification of an exhaust gas from an internal combustion engine, which uses the sulfur component trapping agent according to any one of claims 13 to 15.

17. A method of purification of an exhaust gas for an internal combustion engine, which comprises oxidizing sulfur components in the exhaust gas, trapping and accumulating the sulfur components in a sulfur component trapping agent, and purifying NOx in the exhaust gas with a NOx purifying catalyst.

18. The method of purification of an exhaust gas according to claim 16 or 17, which comprises a step for releasing the sulfur components from the NOx purifying catalyst, wherein the releasing step is carried out by changing the air fuel ratio to rich or stoichiometric and elevating temperature of the NOx purifying catalyst to 500 °C or higher.

19. A method of diagnosis of degradation of a sulfur component trapping agent in an exhaust gas purification apparatus comprising a NOx purification catalyst, a sulfur component trapping agent disposed before the NOx purification catalyst, and a sulfur component oxidizing catalyst disposed before the sulfur component trapping agent, which comprises measuring NOx purification rates before and after a step of releasing a sulfur component from the NOx purification catalyst and diagnosing a degradation of the sulfur component trapping agent based on a difference or ratio of the NOx purification rates.

20. A system for diagnosis of degradation of a sulfur component agent in an exhaust gas purification apparatus comprising a NOx purification catalyst for trapping NOx, a sulfur component trapping agent disposed before the NOx purification catalyst for trapping sulfur components, a sulfur component oxidizing catalyst disposed before the sulfur component trapping agent, which comprises means for diagnosing the sulfur component trapping agent in accordance with the diagnosis method defined in claim 19 for every sulfur component releasing step, and means for indicating replacement of the sulfur component trapping agent when the sulfur component trapping agent is degraded to a predetermined level.

# FIG. 1

ENGINE

S OXIDIZING CAT.

S TRAPPING AGENT

NOx TRAPPING CAT.

# FIG. 2

S TRAPPING RATE (%)

100
90
80
70
60
50
40
30
20
10
0

NON-DISPOSITION

DISPOSITION

S OXIDIZING CAT.

## FIG. 3

## FIG. 4

## FIG. 5

## FIG. 6

# FIG. 7

ENGINE

S OXIDIZING CAT.

S TRAPPING AGENT

NOx TRAPPING CAT.

# FIG. 8

NOx PURIFICATION RATE (%)

FLOW TIME OF 300ppm SO$_2$ GAS (h)

## FIG. 9

## FIG. 10

# FIG. 11

# FIG. 12

<div align="center">**INTERNATIONAL SEARCH REPORT**</div>

| | International application No. |
|---|---|
| | PCT/JP2004/004053 |

**A. CLASSIFICATION OF SUBJECT MATTER**
$Int.Cl^7$ F01N3/20, F01N3/02

According to International Patent Classification (IPC) or to both national classification and IPC

**B. FIELDS SEARCHED**

Minimum documentation searched (classification system followed by classification symbols)
$Int.Cl^7$ F01N3/20, F01N3/02

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2000-303826 A (Isuzu Motors Ltd.),<br>31 October, 2000 (31.10.00),<br>Par. Nos. [0017] to [0023]; Fig. 1 | 1-4,6,7,9-18<br>5,8<br>19,20 |
| Y | JP 2001-293366 A (Toyota Central Research And Development Laboratories, Inc.),<br>23 October, 2001 (23.10.01),<br>Par. No. [0035] | 5 |
| Y | JP 2002-153733 A (Nissan Motor Co., Ltd.),<br>28 May, 2002 (28.05.02),<br>Fig. 2<br>& US 2002/0053202 A1 | 8 |
| A | JP 2000-38919 A (Toyota Motor Corp.),<br>08 February, 2000 (08.02.00),<br>Par. No. [0026] | 1-20 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 July, 2004 (26.07.04) | Date of mailing of the international search report<br>17 August, 2004 (17.08.04) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| International application No. |
|---|
| PCT/JP2004/004053 |

**Box No. II   Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

The matter common to the inventions according to claims 1 to 20 is an S component capturing material.

The search has revealed that the S component capturing material is described in JP 2000-303826 A (Isuzu Motors Ltd.), 31 October, 2000 (31.10.00), [0017] to [0023], JP 2001-293366 A (Toyota Central Research And Development Laboratories, Inc.), 23 October, 2001 (23.10.01), [0035], and JP 2002-153733 A (Nissan Motor Co., Ltd.), 28 May, 2002 (28.05.02), FIG. 2, and the like, and thus is not novel. As a result, this common matter is not a special technical feature.

(continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest.
☐ No protest accompanied the payment of additional search fees.

Form PCT/ISA/210 (continuation of first sheet (2)) (January 2004)

**INTERNATIONAL SEARCH REPORT**

International application No.

PCT/JP2004/004053

Continuation of Box No.III of continuation of first sheet(2)

Therefore, the technical relationship in the meaning of PCT Rule 13 cannot be found among these inventions.

Accordingly, the inventions according to claims 1 to 20 do not comply with the requirement of unity of invention.

Form PCT/ISA/210 (extra sheet) (January 2004)

**REFERENCES CITED IN THE DESCRIPTION**

**Patent documents cited in the description**

- JP 11319564 A
- JP 8192051 A

- JP 11169708 A

**Non-patent literature cited in the description**

- Chemistry Encyclopedia. Maruzen Publishing Co,